# EUROPEAN PATENT SPECIFICATION

(11) **EP 1 047 922 B1**
(45) Date of publication and mention of the grant of the patent: **05.10.2005**
(21) Application number: 99902643.8
(22) Date of filing: 18.01.1999
(51) Int. Cl.: G01K 3/04

(54) **BARRIER MATERIALS AND PRODUCTS PRODUCED THEREWITH**
SPERRMATERIALEN UND DAMIT HERGESTELLTE PRODUKTE
MATERIAUX FORMANT BARRIERE ET PRODUITS CONSTITUES DE CES MATERIAUX

(30) Priority: 16.01.1998 GB 9800814
(43) Date of publication of application: 02.11.2000
(73) Proprietor: Food Guardian Limited, London W1V 0HR (GB)
(72) Inventor: MOULE, Robert, Penzance TR19 6XH (GB); MOULE, Simon, London N4 1EQ (GB)
(74) Representative: Atkinson, Peter Birch
(86) International application number: PCT/GB1999/000044
(87) International publication number: WO 1999/036755

(56) References cited:
- EP-A- 0 356 169
- EP-A- 0 462 767
- DE-A- 1 648 263
- US-A- 5 231 268
- US-A- 5 597 238

## Description

The present invention relates to heat disruptable barrier materials (particularly but not exclusively thin plastics films), to the disruption of such materials, and to products incorporating these materials.

There are numerous examples of products incorporating barrier materials which must be disrupted (e.g. punctured) to allow communication between both sides of the barrier. Examples of such products include containers which contain food to be microwaved and which are covered with a film or the like which must be punctured prior to the food being microwaved to ensure that steam is vented from the container. Whilst it may be a relatively simple task manually to puncture the film for a single product item, it obviously becomes time consuming to repeat the operation for a plurality of items, e.g. for catering on a commercial scale.

A further problem of puncturing barrier layers occurs when the barrier is beneath a further layer which itself must not be punctured. A particular example of this problem is encountered in the marking element disclosed in WO-A-9208113 which is used for indicating whether a product has been maintained under a particular temperature or temperature-time condition. More particularly the marking element as manufactured comprises an ink separated from an absorbent wick by a heat disruptable film, all of these components being provided beneath an upper film layer of higher melting/softening temperature than the heat disruptable film.

By way of further explanation, the marking element may be one which is to be used for indicating whether frozen food has been stored at a higher temperature (e.g. room temperature) than is required. As such, the ink is one which is (i) not capable of flowing at the correct storage temperature of the food, but (ii) capable of flowing at or above the temperature at which the food should not be stored. When the marking element is manufactured it is necessary to ensure that the ink (which will flow at the manufacturing temperature) is separated from the wick - hence the need for the barrier layer.

Subsequent to manufacture, the marking element is cooled down (either before or after application to the product to be monitored) to a temperature at which the ink will not flow. The element is then "activated" by application of a heated probe to the upper film layer. This probe is at a temperature at which it does not disrupt the outer film layer but is capable of puncturing the heat disruptable layer so as to allow the ink to reach the wick. If the temperature the product increases beyond a predetermined value then the ink is capable of flowing in the wick to provide an indication of the undesired increase in temperature.

Whilst such marking elements function is a perfectly satisfactory manner, the need to use a heated probe makes it difficult to activate the elements, particularly if they have already been applied to the product to be monitored.

It is an object of the present invention to obviate or mitigate the abovementioned disadvantages.

According to a first aspect of the present invention there is provided a marking element for indicating whether a pre-defined temperature condition has been maintained comprising a first material capable of flowing above a predetermined temperature separated from a second absorbent material by a heat disruptable barrier layer, the first and second materials being such that when the barrier layer is punctured and the predetermined temperature is exceeded the first material flows in the second material to produce a detectable change wherein the heat disruptable barrier layer is comprised of a heat disruptable material associated with an element capable of being inductively heated by electromagnetic energy to effect disruption of said material.

According to a second aspect of the present invention there is provided a method of activating a marking element as defined in the previous paragraph, the method comprising subjecting the marking element to electromagnetic energy capable of inductively heating said inductive heatable element to effect disruption of the barrier layer.

The heat disruptable material may for example be a film, most preferably a plastics film.

The inductively heatable element may of any material with the requisite conductivity, e.g. metal, carbon or a conductive plastics or polymeric material. Conveniently the inductively heatable element is provided by a marking of an electrically conductive (e.g. metallic) ink or patch on or otherwise associated with the heat disruptable material. Further possibilities for the element are a foil, sheet or film of a metal. A still further possibility is a marking of a graphite (carbon) loaded ink.

The inductively heatable element may be on either side of, or within, the barrier material and may be of any desired shape appropriate to the electromagnetic energy to the used, e.g. a disc or an annulus. The annulus may be of uniform width across its inner and outer edges (e.g. as provided by two concentric circles) or may have one or more "restrictions" around its width.

Preferably also the electromagnetic energy for inductively heating the element is radiofrequency energy (10⁴Hz to 3 x 10¹² Hz). Preferably the frequency is from 50 kHz to 1 Mhz more typically 100 kHz to 500 kHz, e.g. 160 kHz to 180 kHz. The power may be 100 W to 1000 W, typically 500 W.

In the marking element according to the invention, the barrier layer together with the first and second materials may be provided beneath an outer layer (e.g. an outer film layer). The barrier layer may be selectively disrupted by the use of electromagnetic energy of the appropriate frequency thus avoiding the need for the outer covering layer to be of a higher melting/softening temperature than the barrier layer and the need to use a heated probe. A related advantage is that the marking element may be activated simply by positioning the element (e.g. in situ on a product to be "monitored" by the element) close to an electromagnetic field of the appropriate frequency to effect disruption of the barrier layer. This is a much more convenient technique to the use of a heated probe.

The barrier material as employed in the marking element is an important feature of the invention in its own right and therefore according to a third aspect of the present invention there is provided a barrier material comprised of a heat disruptable material associated with an element capable of being inductively heated by electromagnetic energy to effect disruption of said material.

According to a fourth aspect of the present invention there is provided a method of disrupting a barrier material as defined in the previous paragraph, the method comprising subjecting the barrier material to electromagnetic energy capable of inductively heating said element to effect disruption of the material.

The electromagnetic energy may be microwave energy such that the barrier material of the invention may be used, for example, as a covering for a container which is intended to be heated in a microwave oven. As such, the microwave energy effects inductive heating of the element resulting in the disruption of the covering. As such the need for manual puncturing is avoided.

The barrier material of the invention is particularly suitable for use in products in which a barrier to be punctured is provided beneath at least one further layer which is required to remain intact since using electromagnetic energy it is possible selectively to disrupt the barrier layer.

The invention will be further described by way of example only with reference to the accompanying drawings, in which:
Fig. 1 is an exploded perspective view of one embodiment of marking element in accordance with the first aspect of the invention;
Fig. 2 is a cross-section of the marking element illustrated in Fig. 1 prior to activation thereof;
Fig. 3 is a cross-section similar to Fig. 2 but shows the marking element in an activated condition and also indicating that a product has been stored above a predetermined temperature; and
Fig. 4 is a plan view of the label in the condition shown in Fig. 3.

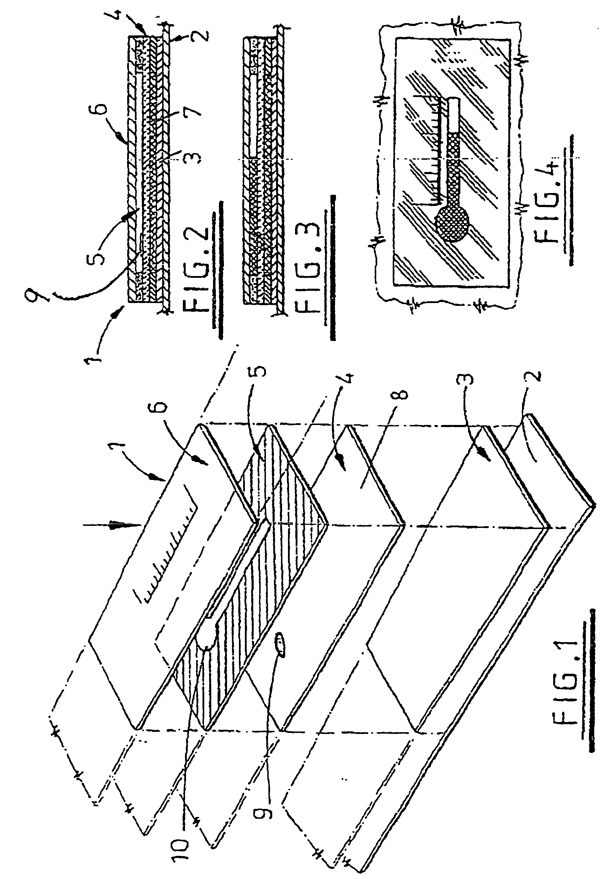

As shown in Fig. 1, a marking element 1 in accordance with the invention is removably mounted on a carrier sheet 2 and is a laminar structure comprised of layers 3-6 described in more detail below and an ink 7 (not shown in Fig. 1 but see Fig. 2).

In more detail, the layer 4 is comprised of a heat disruptable plastics film 8 provided with an inductively heatable element in the form of a marking 9 of an inductively heatable conductive ink. Alternatively the inductively heatable element may for example be provided by a thin metal disc or a metal joint. At its undersurface, barrier layer 4 is bonded around its peripheral surface to the corresponding area of the upper surface of the layer 3 so that a reservoir space (in which the ink 7 is located) is formed between the layers 3 and 4. The undersurface of layer 3 is releasably attached to carrier 2 so that the label 1 may be removed therefrom and attached (by the adhesive) to a product to be monitored.

The indicator layer 5 is of paper which has been treated with a resin so that only a central area 10 (shown in Fig. 1 in the shape of a thermometer) remains absorbent, the remaining area of the layer 5 as depicted by the hatched lines being non-absorbent. The undersurface of layer 5 is bonded in the hatched areas to the upper surface of the barrier layer 4 and it will be noted from Fig. 1 that the marking 9 of reflective ink (on the barrier layer 4) locates immediately beneath the "bulb" of the thennometer-shaped absorbent area 10 of indicator layer 5.

Layer 6 is a clear plastics layer which overlies, and is bonded to the indicator layer 5. The absorbent area 10 is of contrasting colour to the ink 7.

In the marking element 1 as shown in Figs. 1 and 2, the barrier layer 4 prevents contact between the ink 7 and the absorbent area 10 of indicator layer 5. The ink 7 is one which (once the barrier layer has been disrupted - see below) is only capable of flowing in the absorbent area 10 of layer 5 if the label 1 is above a predetermined temperature. The ink may, for example, comprise an alkyl (particularly a C₁₋₄ alkyl) ester of a long-chain fatty acid. Examples of esters which may be used include ethyl myristate, butyl myristate and butyl laurate. It will of course be appreciated that the ink may comprise a mixture of esters to ensure that the ink flows above a particular temperature. A further possibility is for the ink to comprise a polymeric material which reversibly fuses above a predetermined temperature, e.g. a thermo-reversable wax. Inorganic salts (e.g. sodium or potassium chloride) can also be incorporated in the polymeric material for providing the required temperature of fusion.

For the purposes of "activation", the label 1 is subjected to a temperature at which the ink 7 will not flow. Subsequently, the label 1 (which may be attached to the product to be monitored) is placed close to an electromagnetic field or sufficient energy (flux density) to effect inductive heating of the ink 9. This causes disruption (puncturing) of the film 8 beneath the "bulb" of the absorbent area 10 of layer 5 which therefore comes into communication with the reservoir of ink 7.

Provided that the product to which the marking element 1 is attached is maintained below a predetermined temperature, the ink is unable to flow (or at least unable to flow to any substantial extent) and does not colour the absorbent area 10. If however the product is raised above the permitted temperature then the ink will flow into, and indelibly mark, the area 10 as depicted in Figs. 3 and 4.

Barrier materials of similar construction to layer four may be used in applications other than a marking element. Such layers may, for example, be used as a covering for a container which is intended to be heated in a microwave oven such that inductive heating of the inductively heatable element results in disruption of the covering.

## Claims

1. A marking element (1) for indicating whether a pre-defined temperature condition has been maintained comprising a first material (7) capable of flowing above a predetermined temperature separated from a second absorbent material (5) by a heat disruptable barrier layer (4) incorporating a heat disruptable material (8), the first and second materials being such that when the barrier layer (4) is punctured and the predetermined temperature is exceeded the first material (7) flows in the second material (5) to produce a detectable change **characterised in that** the heat disruptable material (8) of the heat disruptable barrier layer (4) is associated with an element (9) capable of being inductively heated by electromagnetic energy to effect disruption of said material (8).

2. A marking element as claimed in claim 1 **characterised in that** there is a lower layer (3) which, together with the heat disruptable barrier layer (4), forms a reservoir for the first material (7), and the absorbent layer (5) is provided on the opposite side of the barrier layer (4) to said reservoir.

3. A marking element (1) as claimed in claim 1 or 2 **characterised in that** the absorbent layer (5) is overlaid by a transparent film (6).

4. A marking element (1) as claimed in any one of claims 1 to 3 **characterised in that** the heat disruptable material (8) is a film.

5. A marking element (1) as claimed in claim 4 **characterised in that** the heat disruptable material is a plastics film.

6. A marking element (1) as claimed in any one of claims 1 to 5 **characterised in that** the inductively heatable element (6) is provided on the heat disruptable material (8).

7. A marking element (1) as claimed in any one of claims 1 to 6 **characterised in that** the inductively heatable element (9) is provided by a conductive ink.

8. A marking element (1) as claimed in claim 7 **characterised in that** the conductive ink (9) is a metallic ink or a graphite loaded ink.

9. A marking element (1) as claimed in any one of claims 1 to 6 **characterised in that** the inductively heatable element (9) is provided by metal, carbon or an electrically conductive plastics or polymeric material.

10. A marking element (1) as claimed in claim 9 **characterised in that** the inductively heatable element (9) is of metal in the form of a film, sheet or foil.

11. A marking element (1) as claimed in any one of claims 1 to 10 **characterised in that** the barrier layer (4) is disruptable by radiofrequency energy.

12. A marking element (1) as claimed in any one of claims 1 to 10 **characterised in that** the element disruptable by microwave energy.

13. A method of activating a marking element (1) as claimed in any one of claims 1 to 12, the method comprising subjecting the marking element (1) to electromagnetic energy capable of inductively heating said inductive heatable element (9) to effect disruption of the barrier layer (4).

14. A barrier material (4) comprised of a heat disruptable material (8) **characterised in that** the material (8) is associated with an element capable of being inductively heated by electromagnetic energy to effect disruption of said material.

## Patentansprüche

1. Anzeigeelement (1) für das Anzeigen, ob ein vorher definierter Temperaturzustand anfrechterhalten wurde, das ein erstes Material (7) aufweist, das über einer vorgegebenen Temperatur fließen kann, getrennt von einem zweiten absorbierenden Material (5) durch eine durch Wärme zerstörbare Sperrschicht (4), die ein durch Wärme zerstörbares Material (8) enthält, wobei das erste und zweite Material so sind, daß, wenn die Sperrschicht (4) durchstoßen und die vorgegebene Temperatur überschritten wird, das erste Material (7) in das zweite Material (5) fließt, um eine nachweisbare Veränderung zu bewirken, **dadurch gekennzeichnet, daß** das durch Wärme zerstörbare Material (8) der durch Wärme zerstörbaren Sperrschicht (4) mit einem Element verbunden ist, das induktiv durch elektromagnetische Energie erwärmt werden kann, um eine Zerstörung des Materials (8) zu bewirken.

2. Anzeigeelement nach Anspruch 1, **dadurch gekennzeichnet, daß** eine untere Schicht (3), die zusammen mit der durch Wärme zerstörbaren Sperrschicht (4) einen Behälter für das erste Material (7) bildet, und die absorbierende Schicht (5) auf der entgegengesetzten Seite der Sperrschicht (4) zum Behälter vorhanden sind.

3. Anzeigeelement (1) nach Anspruch 1 oder 2, **dadurch gekennzeichnet, daß** die absorbierende Schicht (5) durch eine Klarsichtfolie (6) überlagert wird.

4. Anzeigeelement (1) nach einem der Ansprüche 1 bis 3, **dadurch gekennzeichnet, daß** das durch Wärme zerstörbare Material (8) eine Folie ist.

5. Anzeigeelement (1) nach Anspruch 4, **dadurch gekennzeichnet, daß** das durch Wärme zerstörbare Material eine Kunststoff-Folie ist.

6. Anzeigeelement (1) nach einem der Ansprüche 1 bis 5, **dadurch gekennzeichnet, daß** das induktiv erwärmbare Element (6) auf dem durch Wärme zerstörbaren Material (8) vorhanden ist.

7. Anzeigeelement (1) nach einem der Ansprüche 1 bis 6, **dadurch gekennzeichnet, daß** das induktiv erwärmbare Element (9) durch eine leitfähige Tinte bereitgestellt wird.

8. Anzeigeelement (1) nach Anspruch 7, **dadurch gekennzeichnet, daß** die leitfähige Tinte (9) eine Metallic-Tinte oder eine graphitgefüllte Tinte ist.

9. Anzeigeelement (1) nach einem der Ansprüche 1 bis 6, **dadurch gekennzeichnet, daß** das induktiv erwärmbare Element (9) durch Metall, Kohlenstoff oder einen elektrisch leitfähigen Kunststoff oder polymeres Material bereitgestellt wird.

10. Anzeigeelement (1) nach Anspruch 9, **dadurch gekennzeichnet, daß** das induktiv erwärmbare Element (9) aus Metall in der Form einer Feinfolie, Schicht oder Folie besteht.

11. Anzeigeelement (1) nach einem der Ansprüche 1 bis 10, **dadurch gekennzeichnet, daß** die Sperrschicht (4) durch Hochfrequenzenergie zerstörbar ist.

12. Anzeigeelement (1) nach einem der Ansprüche 1 bis 10, **dadurch gekennzeichnet, daß** das Element durch Mikrowellenenergie zerstörbar ist.

13. Verfahren zum Aktivieren eines Anzeigeelementes (1) nach einem der Ansprüche 1 bis 12, wobei das Verfahren das Unterwerfen des Anzeigeelementes (1) einer elektromagnetischen Energie aufweist, die in der Lage ist, das induktiv erwärmbare Element (9) induktiv zu erwärmen, um eine Zerstörung der Sperrschicht (4) zu bewirken.

14. Spermaterial (4), das ein durch Wärme zerstörbares Material (8) aufweist, **dadurch gekennzeichnet, daß** das Material (8) mit einem Element verbunden ist, das durch elektromagnetische Energie induktiv erwärmt werden kann, um eine Zerstörung des Materials zu bewirken.

## Revendications

1. Elément de marquage (1) destiné à indiquer si un état de température prédéfinie a été maintenu, comprenant un premier matériau (7) pouvant s'écouler au-dessus d'une température prédéterminée, séparé d'un deuxième matériau absorbant (5) par une couche de barrière à dissociation thermique (4) incorporant un matériau à dissociation thermique (8), les premier et deuxième matériaux étant tels que lorsque la couche de barrière (4) est perforée, la température prédéterminée étant dépassée, le premier matériau (7) s'écoule dans le deuxième matériau (5) pour établir un changement détectable, **caractérisé en ce que** le matériau à dissociation thermique (8) de la couche de barrière à dissociation thermique (4) est associé à un élément se prêtant à un chauffage par induction par une énergie électromagnétique, de sorte à entraîner la dissociation dudit matériau (8).

2. Elément de marquage selon la revendication 1, **caractérisé en ce qu'**il comporte une couche inférieure (3), formant, ensemble avec la couche de barrière à dissociation thermique (4), un réservoir du premier matériau (7), la couche absorbante (5) étant agencée sur le côté de la couche de barrière (4) opposé audit réservoir.

3. Elément de marquage (1) selon les revendications 1 ou 2, **caractérisé en ce qu'**un film transparent (6) est superposé à la couche absorbante (5).

4. Elément de marquage (1) selon l'une quelconque des revendications 1 à 3, **caractérisé en ce que** le matériau à dissociation thermique (8) est constitué par un film.

5. Elément de marquage (1) selon la revendication 4, **caractérisé en ce que** le matériau à dissociation thermique est constitué par un film plastique.

6. Elément de marquage (1) selon l'une quelconque des revendications 1 à 5, **caractérisé en ce que** l'élément so prêtant à un chauffage par induction (6) est agencé sur le matériau à dissociation thermique (8).

7. Elément de marquage (1) selon l'une quelconque des revendications 1 à 6, **caractérisé en ce que** l'élément se prêtant à un chauffage par induction (9) est constitué par une encre conductrice.

8. Elément de marquage (1) selon la revendication 7, **caractérisé** on ce que l'encre conductrice (9) est constituée par une encre métallique ou une encre chargée de graphite.

9. Elément de marquage (1) selon l'une quelconque des revendications 1 à 6, **caractérisé en ce que** l'élément se prêtant à un chauffage par induction (9) est constitué par un métal, du carbone, un plastique conducteur d'électricité ou un matériau polymère

10. Elément de marquage (1) selon la revendication 9, **caractérisé en ce que** l'élément se prêtant à un chauffage par induction (9) est composé de métal sous forme d'un film, d'une feuille ou d'une feuille plastique

11. Elément de marquage (1) selon l'une quelconque des revendications 1 à 10, **caractérisé en ce que** la couche de barrière (4) est dissociable par énergie haute fréquence.

12. Elément de marquage (1) selon l'une quelconque des revendications 1 à 10, **caractérisé en ce que** l'élément est dissociable par énergie micro-ondes.

13. Procédé d'activation d'un élément de marquage (1) selon l'une quelconque des revendications 1 à 12, le procédé comprenant l'étape d'exposition de l'élément de marquage (1) à une énergie électromagnétique capable d'assurer un chauffage par induction dudit élément se prêtant à un chauffage par induction (9) pour entraîner une dissociation de la couche de barrière (4).

14. Matériau de barrière (4) composé d'un matériau à dissociation thermique (8), **caractérisé en ce que** le matériau (8) est associé à un élément so prêtant à un chauffage par induction par une énergie électromagnétique pour entraîner la dissociation dudit matériau.
